# EUROPEAN PATENT APPLICATION

(11) **EP 4 249 151 A1**
(43) Date of publication of application: **27.09.2023**
(21) Application number: 21900667.3
(22) Date of filing: 02.12.2021
(51) Int. Cl.: B22F 9/00, B22F 1/00

(54) **PASTE**

(30) Priority: 04.12.2020 WO PCT/JP2020/045278
(71) Applicant: Resonac Corporation, Tokyo 105-8518 (JP)
(72) Inventor: YONEKURA, Motoki, Tokyo 105-8518 (JP); ARIFUKU, Motohiro, Tokyo 105-8518 (JP); URASHIMA, Kosuke, Tokyo 105-8518 (JP)
(74) Representative: Berggren Oy
(86) International application number: PCT/JP2021/044281
(87) International publication number: WO 2022/118916

(57) **Abstract**

Provided is a paste including: a metallic element-containing powder; an epoxy group-containing compound; and a curing agent, wherein a thermogravimetric reduction rate is 5% or less after heat curing at 180 °C. The paste can be suitably used as a material for a magnetic core of an inductor or as a material for filling between conductors of a coil, and is capable of easily providing a formed body having excellent insulation properties.

## Description

### TECHNICAL FIELD

One embodiment of the present invention relates to a paste. More specifically, it relates to a paste capable of suppressing property degradation in the cured product after heat curing.

### BACKGROUND ART

Materials containing metal powders having various physical properties are used according to the properties required for industrial products. For example, materials containing magnetic powders are used in fields such as inductors, electromagnetic wave shields, and bonded magnets. In particular, there has been recently a growing demand for materials containing magnetic powders and resins and having better formability than sintered magnets. For example, Patent Literatures 1 to 4 disclose magnetic powder pastes containing magnetic powders and resins.

### CITATION LIST

### PATENT LITERATURE

Patent Literature 1: Japanese Unexamined Patent Application Publication No. 2004-31786
Patent Literature 2: Japanese Unexamined Patent Application Publication No. 8-273916
Patent Literature 3: Japanese Unexamined Patent Application Publication No. 1-261897
Patent Literature 4: Japanese Unexamined Patent Application Publication No. 2014-127624

### SUMMARY OF THE INVENTION

### PROBLEMS TO BE SOLVED BY THE INVENTION

By forming and curing a metal powder paste (hereinafter, sometimes referred to as a paste) containing a curable resin, a formed body (cured product) containing a metal powder can be formed. Generally, in order to enhance properties such as the strength, electrical conductivity, thermal conductivity, and magnetic properties of the formed body obtained after curing, it is necessary to increase the blending ratio of a metal powder in a paste and to reduce the ratio of components other than the metal powder. However, as the blending ratio of the metal powder increases, viscosity of the paste also increases and fluidity tends to decrease. Therefore, a method of adding a volatile component such as an organic solvent to the paste to adjust the viscosity is usually used.

However, for example, when the amount of an organic solvent in the paste is large, a drying process is required after the paste is applied, and volatilization of the organic solvent causes an environmental load. In addition, volumetric shrinkage occurs with the volatilization of the organic solvent, and thus the substrate may be exposed from part of a surface to which the paste is applied.

Furthermore, the use of an organic solvent is likely to cause properties of the cured product to deteriorate. For example, stress strain accumulates inside the cured product of the paste due to volumetric shrinkage caused by volatilization of the organic solvent. When an organic solvent having a boiling point lower than the heating temperature for curing is used, voids are likely to occur in the cured product due to volatilization of the organic solvent during heating. The presence of voids in the cured product tends to degrade the mechanical strength and magnetic properties of the cured product. In contrast, when an organic solvent having a boiling point higher than the heating temperature for curing is used, the organic solvent hardly volatilizes during heating and remains as it is in the cured product, and this tends to degrade product properties. In particular, when the organic solvent remains in the cured product, ionic components and the like in the cured product tend to migrate, and electrical insulation properties (hereinafter referred to as insulation properties) such as insulation resistance and insulation reliability tend to decrease.

For these reasons, it is desirable to have a metal powder paste that can reduce the amount of an organic solvent used, suppresses performance degradation due to a volatile component such as an organic solvent in the cured product after heat curing, and can easily obtain properties such as excellent insulation properties. Furthermore, the coefficient of thermal expansion (CTE) of a cured product of a metal powder paste is also an important property. When there is a large difference between the CTE of a cured product of the metal powder paste and the CTE of a peripheral material to which a cured product is applied, the difference in expansion during heating may cause defects such as warpage in the cured product, delamination at the interface with the peripheral material, and cracking in the cured product. Thus, for example, in the case of inductors, the CTEs of a copper coil, a wiring board material on which an inductor is mounted, and the like are low, and thus the CTE of the cured product of the metal powder paste is desired to be also low in accordance with these peripheral materials.

The present invention has been made in view of the above circumstances and provides a metal powder paste capable of suppressing performance degradation due to a volatile component such as an organic solvent in a cured product after heat curing and obtaining excellent properties such as insulation properties in the cured product.

### MEANS TO SOLVE THE PROBLEMS

More specifically, embodiments of the present invention relate to the following. However, the present invention is not limited to the following embodiments and includes various embodiments.

One embodiment relates to a paste containing a metallic element-containing powder, an epoxy group-containing compound, and a curing agent, wherein a thermogravimetric reduction rate is 5% or less after heat curing at 180 °C. In the one embodiment, the paste contains a metallic element-containing powder, an epoxy group-containing compound, and a curing agent, wherein it is preferably that a thermogravimetric reduction rate is 5% or less after heat curing at 180 °C, and a cured product has a coefficient of thermal expansion of 40 ppm/°C or less.

In the above embodiment, the curing agent preferably contains at least one selected from the group consisting of an amine-based curing agent and an imidazole-based curing agent. The amine-based curing agent preferably contains an aromatic amine.

In the above embodiment, the epoxy group-containing compound preferably contains an epoxy resin that is liquid at 25 °C.

In the above embodiment, the curing agent preferably contains a curing agent that is liquid at 25 °C.

In the above embodiment, the amount of the metallic element-containing powder is preferably 70% by mass or more based on the total mass of the paste.

In the above embodiment, the metallic element-containing powder preferably contains a magnetic powder.

In the above embodiment, the viscosity of the paste at 25 °C is preferably 1 Pa·s or more and 600 Pa·s or less.

Another embodiment relates to the paste according to the above embodiment to be used for screen printing.

The disclosure of the present application relates to the subject matter described in International Application No. PCT/JP2020/45278 filed on December 4, 2020, and the entire contents thereof are incorporated herein by reference.

### EFFECTS OF THE INVENTION

Embodiments of the present invention are capable of providing a metal powder paste capable of reducing the amount of a volatile component used such as an organic solvent. Hence, a metal powder paste can be provided being capable of suppressing performance degradation due to a volatile component such as an organic solvent in the cured product after heat curing and of easily obtaining excellent properties such as insulation properties in the cured product. By using a metal powder paste according to the above embodiment, a cured product having a low CTE can be easily obtained.

### DETAILED DESCRIPTION OF THE INVENTION

Embodiments of the present invention will be described below. However, the present invention is not in any way limited to the embodiments described below.

In this specification, a numerical range indicated using "to" indicates a range that includes the numerical values stated before and after "to" as the minimum and maximum values, respectively. In numerical ranges described stepwise in this description, the upper or lower value of the numerical range in one step can be arbitrarily combined with the upper or lower value of the numerical range in another step.

Materials exemplified in this specification can be used alone or in combinations of two or more, unless otherwise noted. In this specification, when there are multiple substances corresponding to each component in a composition, the amount of each component in the composition refers to the total amount of multiple substances present in the composition, unless otherwise noted.

### < Paste >

A paste which is one embodiment of the present invention contains a metallic element-containing powder, an epoxy group-containing compound, and a curing agent, and the paste can be formed into a cured product through heat treatment. The paste according to the embodiment is characterized by being capable of suppressing an increase in viscosity accompanying an increase in the blending amount of the metallic element-containing powder, and of reducing the amount of a volatile component such as an organic solvent, and thus has a small reduction in mass when a cured product is formed from the paste.

The paste having a small amount of a volatile component such as an organic solvent has excellent heat resistance and suppresses deterioration in properties of the cured product due to volatilization of the volatile component during heating. More specifically, the paste according to the above embodiment is characterized by having a thermogravimetric reduction rate of 5% or less when subjected to heat treatment at, for example, 180 °C to form a cured product. The thermogravimetric reduction rate is more preferably 3% or less, and even more preferably 2% or less. The thermogravimetric reduction rate is most preferably 0%. The thermogravimetric reduction rate can be calculated from a value measured using a thermogravimetry and differential thermal analyzer (TG-DTA). When the thermogravimetric reduction rate of the paste is 5% or less, desired properties such as insulation properties can be easily obtained in a cured product after heat curing of the paste.

It is preferable that the coefficient of thermal expansion (CTE) of a cured product of the paste have a small difference from the CTEs of peripheral materials of the cured product. In one embodiment, for example, when the paste is applied to an inductor or the like, the CTEs of a copper coil, a wiring board material, and the like are low, and thus the CTE of a cured product of the paste is also preferably low. From this viewpoint, in one embodiment, the CTE of a cured product of the paste is preferably 40 ppm/°C or less, more preferably 30 ppm/°C or less, and even more preferably 25 ppm/°C or less. When the CTE of a cured product of the paste is 40 ppm/°C or less, the occurrence of defects such as warpage, delamination at the interface with the peripheral material, and cracking can be easily suppressed.

Note that the cured product of the above paste may be obtained by forming the paste under a curing condition of maintaining the paste at 165 °C and 2 MPa for 30 minutes, raising the temperature to 180 °C, and maintaining the temperature for 1 hour, under vacuum conditions. In forming the cured product, preforming may be performed prior to the above curing. Preforming can be performed, for example, in a nitrogen atmosphere, by heating the paste at 100 °C for 1 hour, subsequently raising the temperature to 150 °C, then maintaining the temperature, and heating the paste for 20 minutes. The CTE value described above means the coefficient of linear thermal expansion in a region below the glass transition temperature, which is measured under conditions of a temperature range of 0 to 250 °C and a temperature increase rate of 10 °C/min.

Components of the paste will be described in detail below.

### (Metallic element-containing powder)

The metallic element-containing powder may contain one metallic element or two or more metallic elements. The metallic element-containing powder may be, for example, at least one powder selected from the group consisting of a single metal, an alloy, and a metallic compound. A metallic element contained in the metallic element-containing powder may be, for example, at least one selected from the group consisting of a base metallic element, a precious metallic element, a transition metallic element, and a rare earth element.

The metallic element may be, for example, at least one selected from the group consisting of iron (Fe), copper (Cu), titanium (Ti), manganese (Mn), cobalt (Co), nickel (Ni), zinc (Zn), niobium (Nb), aluminum (Al), tin (Sn), chromium (Cr), barium (Ba), strontium (Sr), lead (Pb), silver (Ag), praseodymium (Pr), neodymium (Nd), samarium (Sm), and dysprosium (Dy).

In one embodiment, the metallic element-containing powder may be a single metal made of only one metallic element or an alloy made of two or more metallic elements. The alloy may contain at least one selected from the group consisting of a solid solution, a eutectic, and an intermetallic compound. The alloy may be stainless steel, such as an Fe-Cr based alloy and an Fe-Ni-Cr based alloy, for example. The alloy may also be a copper alloy, such as a Cu-Sn based alloy, a Cu-Sn-P based alloy, a Cu-Ni based alloy, and a Cu-Be based alloy.

In one embodiment, the metallic element-containing powder may be a powder of a metal compound containing a metallic element exemplified above and an element other than the metallic element described above. Examples of the element other than a metallic element described above include at least one selected from the group consisting of carbon (C), oxygen (O), beryllium (Be), phosphorus (P), boron (B), and silicon (Si). The metal compound may be, for example, a metal oxide such as iron oxide. The metal compound may be a magnetic substance obtained by mixing and sintering a metallic element, such as cobalt, nickel, and manganese, with a metal oxide as a main component. An example of the magnetic substance is ferrite.

In one embodiment, the metallic element-containing powder may be a powder of a magnetic substance. The magnetic substance may be a soft magnetic alloy or a ferromagnetic alloy. The magnetic substance powder (hereinafter referred to as magnetic powder) may be, for example, at least one selected from the group consisting of an Fe-Si based alloy, an Fe-Si-Al based alloy (sendust), an Fe-Ni based alloy (permalloy), an Fe-Cu-Ni based alloy (permalloy), an Fe-Co based alloy (permendur), an Fe-Cr-Si based alloy (electromagnetic stainless steel), an Nd-Fe-B based alloy (rare earth magnet), an Sm-FeN based alloy (rare earth magnet), an Al-Ni-Co based alloy (alnico magnet), and ferrite. Ferrite may be, for example, spinel ferrite, hexagonal ferrite, or garnet ferrite.

The metallic element-containing powder may contain at least one selected from the group consisting of a simple metallic element exemplified above, an alloy thereof, and a metal compound thereof.

In one preferred embodiment, the metallic element-containing powder may contain at least one powder selected from the group consisting of elemental Fe and an Fe-based alloy. The Fe-based alloy may be, for example, at least one selected from the group consisting of an Fe-Si based alloy, an Fe-Si-Al based alloy, an Fe-Ni based alloy, an Fe-Cu-Ni based alloy, an Fe-Co based alloy, an Fe-Cr-Si based alloy, an Fe-Si-B based alloy, and an Fe-Si-B-P-Nb-Cr based alloy. The Fe-based alloy may be an Fe amorphous alloy. When the paste contains at least one of elemental Fe and an Fe-based alloy, a formed body having excellent magnetic properties can be easily obtained. Especially, when the paste contains an Fe amorphous alloy powder, better magnetic properties can be easily obtained.

The Fe amorphous alloy powder is an amorphous powder obtained by rapidly cooling an alloy made by melting Fe, which is the main component, together with another element such as Si, at a high temperature, and is also known as a metallic glass. An Fe amorphous alloy powder can be produced according to a method well known in the art.

An Fe amorphous alloy powder can also be obtained as a commercial product. Examples include AW2-08 and KUAMET-6B2 (product names) manufactured by EPSON ATMIX Corporation, DAPMS3, DAPMS7, DAPMSA10, DAPPB, DAPPC, DAPMKV49, DAP410L, DAP430L, and the DAPHYB series (product names) manufactured by Daido Steel Co., Ltd., and MH45D, MH28D, MH25D, and MH20D (product names) manufactured by Kobe Steel, Ltd. One of these Fe amorphous alloy powders may be used, or a combination of two or more may be used.

The shape of the individual particles constituting the metallic element-containing powder is not particularly limited. The individual particles may be, for example, spherical, ellipsoidal, flattened, plate-shape, rod-shaped, or needle-shaped. Spherical particles are preferred in view of the proportion of metallic-element-containing particles in a cured product of the paste and reducing the viscosity of the paste. In view of the thixotropy of the paste, a combination of flat-shaped particles and needle-shaped particles may be used.

The average particle size of the metallic element-containing powder may be 0.05 to 200 µm, more preferably 0.5 to 100 µm, and even more preferably 1 to 50 µm. "Average particle size" described in this specification means a particle size at an integrated value of 50% (based on volume) in the particle size distribution. When the metallic element-containing powder is coated as described below, the average particle size of the metallic element-containing powder including the coating film may be within the above ranges.

In one embodiment, the paste may contain multiple metallic element-containing powders having different average particle sizes (D50). For example, two or more metallic element-containing powders having different average particle sizes may be used in combination. In this embodiment, gaps formed in a metallic element-containing powder having a larger average particle size are easily filled with another metallic element-containing powder having a smaller average particle size. Thus, the proportion of the area occupied by the metallic element-containing powder in the cured product of the paste can be easily enhanced. The particle size distribution of the metallic element-containing powder is calculated based on, for example, weight measurement with sieving and analysis using a measuring instrument such as a laser diffraction/scattering device.

In one embodiment, the metallic element-containing powder may have all or part of the surface of the metallic element-containing powder coated with a surface treatment agent. Examples of the surface treatment agent may include an inorganic oxide, a phosphoric acid-based compound, a phosphate-based compound, an inorganic surface treatment agent such as a silane coupling agent, an organic surface treatment agent such as montane wax, and a resin cured product. As the surface treatment agent, a coupling agent described below can also be used.

In one embodiment, for example, a metallic magnetic powder such as an Fe-based alloy preferably has the entirety or part of the surface coated with an insulating material. Examples of the insulating material include silica, titania, calcium phosphate, montane wax, and an epoxy resin cured product.

In one embodiment, the metallic element-containing powder may include a magnetic powder (hereinafter referred to as an insulating coated magnetic powder) whose surface is coated with an insulating material. The paste containing the insulating coated magnetic powder can easily provide a cured product having excellent magnetic properties and excellent insulation properties. The paste containing the insulating coated magnetic powder may contain two or more insulating coated magnetic powders, and the average particle size of two or more insulating coated magnetic powders may be the same or different from each other. The paste containing the insulating coated magnetic powder may further contain a magnetic powder without having insulating coating (hereinafter referred to as an uncoated magnetic powder) in addition to the insulating coated magnetic powder. The average particle size of the uncoated magnetic powder may be the same or different from the average particle size of the insulating coated magnetic powder. For example, it is preferable that the average particle size of the uncoated magnetic powder be smaller than the average particle size of the insulating coated magnetic powder from the viewpoint of developing insulation properties.

In one embodiment, the insulating coated magnetic powder may be an Fe amorphous alloy powder with insulating coating. For example, "KUAMET9A4" (Fe-Si-B alloy, D50:20 µm, with insulation coating) manufactured by EPSON ATMIX Corporation and "SAP-2C" (Fe-Si-B-P-Nb-Cr-based alloy, D50:2.2 µm, with insulation coating) manufactured by SINTOKOGIO, LTD. may be suitably used. In one embodiment, both are preferably used together. As a magnetic powder to be used together with an Fe amorphous alloy powder having insulation coating, for example, a soft ferrite powder "BSN-125" (Ni-Zn based alloy, D50:10 µm, with no insulation coating) manufactured by TODA KOGYO CORP. can be suitably used.

The amount of a metallic element-containing powder in the paste may be 70% by mass or more based on the total mass of the paste. The amount of the metallic element-containing powder is preferably 80% by mass or more, more preferably 90% by mass or more, and even more preferably 94% by mass or more. When the amount of the metallic element-containing powder is 70% by mass or more, a formed body having an excellent property derived from the metallic element-containing powder can be easily obtained. For example, when the metallic element-containing powder is a magnetic powder, an inductor having excellent magnetic properties can be formed and excellent mechanical strength can also be obtained.

The amount of the metallic element-containing powder in the paste is less than 100% by mass and may be 99.9% by mass, based on the total mass of the paste. From the viewpoint of fluidity of the paste and mechanical strength of the formed body, the amount of the metallic element-containing powder is preferably 99.8% by mass or less, more preferably 98% by mass or less, and even more preferably 96% by mass or less.

In one embodiment, the amount of the metallic element-containing powder in the paste is, based on the total mass of the paste, preferably 80 to 99.9% by mass or more, more preferably 90 to 99.8% by mass or more, and even more preferably 94 to 96% by mass.

### (Epoxy group-containing compound)

An epoxy group-containing compound means a compound having one or more epoxy groups in a molecule and may be in the form of any of a monomer, an oligomer, and a polymer, the oligomer and the polymer having a structural unit formed by polymerization of a monomer. The epoxy group-containing compound is cured through heat treatment and can function as a binder resin to bind the metallic element-containing powder.

Examples of the epoxy group-containing compound include an oligomer and a polymer having two or more epoxy groups in a molecule, commonly known as an epoxy resin. Another example of the epoxy group-containing compound is a compound that has one or more epoxy groups in a molecule but does not contain a structural unit formed through polymerization (hereinafter referred to as an epoxy compound). Such an epoxy compound is commonly known as a reactive diluent. The epoxy group-containing compound preferably contains at least one selected from the group consisting of an epoxy resin and an epoxy compound.

The epoxy resin may be, for example, at least one selected from the group consisting of a biphenyl-type epoxy resin, a stilbene-type epoxy resin, a diphenylmethane-type epoxy resin, a sulfur atom-containing-type epoxy resin, a novolac-type epoxy resin, a dicyclopentadiene-type epoxy resin, a salicylaldehyde-type epoxy resin, a copolymerization-type epoxy resin of naphthols and phenols, an epoxidation product of an aralkyl-type phenolic resin, a bisphenol-type epoxy resin, a glycidyl ether-type epoxy resin of alcohols, a glycidyl ether-type epoxy resin of a paraxylylene and/or methaxylylene-modified phenolic resin, a glycidyl ether-type epoxy resin of a terpene-modified phenolic resin, a cyclopentadiene-type epoxy resin, a glycidyl ether-type epoxy resin of a polycyclic aromatic ring-modified phenolic resin, a glycidyl ether-type epoxy resin of a naphthalene ring-containing phenolic resin, a glycidyl ester-type epoxy resin, a glycidyl-type or methyl glycidyl-type epoxy resin, an alicyclic-type epoxy resin, a halogenated phenol novolak-type epoxy resin, a hydroquinone-type epoxy resin, a trimethylolpropane-type epoxy resin, and a linear aliphatic epoxy resin obtained by oxidizing an olefin bond with a peracid such as a peracetic acid. The properties of the epoxy resins may be any of liquid, semisolid, and solid, or a mixture of these.

The molecular weight of the epoxy compound may preferably be 100 or more, more preferably 150 or more, and even more preferably 200 or more. When an epoxy compound having a molecular weight of 100 or more is used, volatilization before reacting with a curing agent can be suppressed by setting appropriate curing conditions. In addition, when the molecular weight is low, the distance between crosslinking points after the reaction is short, and the occurrence of the defect that the cured product is likely to crack can be reduced.

In contrast, the molecular weight of the epoxy compound may be preferably 700 or less, more preferably 500 or less, and even more preferably 300 or less. When an epoxy compound having a molecular weight of 700 or less is used, a viscosity that is appropriate as a diluent can be easily obtained.

In one embodiment, the molecular weight of the epoxy compound is preferably in a range of 100 to 700, more preferably in a range of 150 to 500, and even more preferably in a range of 200 to 300. When an epoxy compound having a molecular weight in such ranges is used, the viscosity adjustment of the paste becomes easy. Unlike a component such as an organic solvent that volatilizes during heating, an epoxy compound cures during heating to be incorporated into the cured product. Therefore, when an epoxy compound is used, it can contribute to the viscosity adjustment of the paste, while suppressing the degradation of the properties of the cured product.

The epoxy compound may contain one or more epoxy groups in a molecule. The epoxy compound may be, for example, at least one selected from the group consisting of n-butyl glycidyl ether, versatic acid glycidyl ether, styrene oxide, ethylhexyl glycidyl ether, phenyl glycidyl ether, butyl phenyl glycidyl ether, 1,6-hexanediol diglycidyl ether, neopentyl glycol diglycidyl ether, diethylene glycol diglycidyl ether, and trimethylolpropane triglycidyl ether.

It is preferable that the epoxy compound be well purified and have a low amount of ionic impurities. For example, in the epoxy compound, ionic impurities, such as free Na ions and free Cl ions, are preferably 500 ppm or less.

The epoxy equivalent of the epoxy group-containing compound may preferably be 80 to 350 g/eq, more preferably 100 to 300 g/eq, and even more preferably 120 to 250 g/eq. When the epoxy equivalent is within the above ranges, viscosity of the epoxy group-containing compound itself becomes low, and thus the adjustment of the viscosity of the paste becomes easy.

The epoxy group-containing compound preferably contains an epoxy group-containing compound that is liquid at 25 °C. In this specification, "liquid at 25 °C" means that the viscosity of an epoxy group-containing compound at 25 °C is 200 Pa·s or less. The above viscosity is a value measured using an E-type viscometer at a temperature of 25 °C, an SPP rotor, and a rotational speed of 2.5 rpm. As the E-type viscometer, for example, a TV-33 type viscometer manufactured by Toki Sangyo Co., Ltd can be used.

When an epoxy group-containing compound that is liquid at 25 °C is used, the blending amount of a volatile component such as an organic solvent usually used to obtain fluidity can be greatly reduced. In one embodiment, a paste not containing an organic solvent can also be formed. In addition, the amount of metallic element-containing powder can be easily increased while ensuring proper fluidity as a paste. From these viewpoints, in one embodiment, the viscosity of the epoxy group-containing compound may be preferably 100 Pa·s or less, more preferably 50 Pa·s or less, and even more preferably 10 Pa·s or less. The viscosity of the epoxy group-containing compound exceeds 0 Pa·s, and may be 0.001 Pa·s or more, or may be 0.01 Pa·s or more.

Among the above epoxy group-containing compounds, the viscosity of the epoxy compound is preferably lower than that of the liquid epoxy resin from the viewpoint of adjusting the paste viscosity. The viscosity of the epoxy compound may be preferably 1 Pa·s or less, more preferably 0.5 Pa·s or less, and even more preferably 0.1 Pa·s or less. The viscosity of the epoxy compound exceeds 0 Pa·s, and may be 0.001 Pa·s or more, or may be 0.01 Pa·s or more.

The epoxy group-containing compound that is liquid at 25 °C may contain at least one selected from the group consisting of an epoxy resin that is liquid at 25 °C (hereinafter referred to as a liquid epoxy resin) and an epoxy compound that is liquid at 25 °C. Based on the total mass of the epoxy group-containing compound, the amount of the liquid epoxy resin may preferably be 50% by mass or more, more preferably 70% by mass or more, and even more preferably 90% by mass or more, and may be 100% by mass. However, the amount of the liquid epoxy resin is not limited to the above ranges.

The liquid epoxy resin may contain, for example, at least one liquid epoxy resin selected from the group consisting of a bisphenol A type epoxy resin, a bisphenol F type epoxy resin, a bisphenol AD type epoxy resin, a bisphenol S type epoxy resin, a naphthalenediol type epoxy resin, a hydrogenated bisphenol A type epoxy resin, and an aminoglycidyl ether type epoxy resin. Among them, it is preferable to use at least one of a liquid bisphenol A type epoxy resin, a liquid bisphenol F type epoxy resin, and a liquid aminoglycidyl ether type epoxy resin.

Liquid epoxy group-containing compounds can be obtained also as commercial products. For example, these are marketed by Nippon Steel Chemical Co., Ltd. as a liquid bisphenol A type epoxy resin and a liquid bisphenol F type epoxy resin. For example, as the liquid bisphenol F type epoxy resin, "YDF-8170C" (product name) (epoxy equivalent 165, viscosity 1,000 to 1,500 mPa·s) can be suitably used. An example of the epoxy compound is the ADEKA GLYCIROL (product name) series manufactured by ADEKA Corporation. For example, "ADEKA GLYCIROL ED-503G" (product name) (epoxy equivalent 135, viscosity 15 mPa·s) can be suitably used.

The paste may further contain another resin in addition to the above epoxy group-containing compound. The other resin may contain at least one selected from the group consisting of a thermosetting resin (except epoxy resins) and a thermoplastic resin.

The thermosetting resin may be at least one selected from the group consisting of a phenolic resin, an acrylic resin, a polyimide resin, and a polyamide imide resin, for example. When a phenolic resin is used in addition to an epoxy group-containing compound, the phenolic resin can also function as a curing agent for the epoxy group-containing compound.

The thermoplastic resin may be, for example, at least one selected from the group consisting of an acrylic resin, polyethylene, polypropylene, polystyrene, polyvinyl chloride, and polyethylene terephthalate. The resin component may further include a silicone resin in addition to an epoxy group-containing compound.

When the paste contains a resin other than an epoxy group-containing compound, the amount of the other resin is preferably adjusted to the extent that it does not decrease the effect of the epoxy group-containing compound. For example, the amount of the other resin is, based on the total mass of the resin in the paste, preferably 50% by mass or less, more preferably 30% by mass or less, and even more preferably 10% by mass or less. However, the amount of the other resin is not limited to the above ranges.

In one embodiment, the blending amount can be adjusted in such a range that the viscosity of the mixture of the epoxy group-containing compound and the other resin is 50 Pa·s or less at 25 °C. The above viscosity is measured using an E-type viscometer under the following conditions: a temperature of 25 °C, a cone-plate rotor, a cone angle of 1°34', and a rotation speed of 2.5 rpm. As the E-type viscometer, for example, a TV-33 type viscometer manufactured by Toki Sangyo Co., Ltd. can be used.

### (Curing agent)

The curing agent is not particularly limited and is any compound as long as it can impart a moderate viscosity to the paste and can react with an epoxy group of the epoxy group-containing compound to form a cured product. A well-known curing agent commonly used as a curing agent for epoxy resins may be used. Examples of curing agents that may be used include a phenol-based curing agent, an acid anhydride-based curing agent, and an amine-based curing agent.

Curing agents are classified into two types: curing agents that cause epoxy resins to cure in a temperature range from low to room temperature, and heat-curable type curing agents that cause epoxy resins to cure with heating. Examples of the curing agents that cause epoxy resins to cure in a temperature range from low to room temperature include aliphatic polyamines, polyaminoamides, and polymercaptans. Examples of the heat-curable type curing agents include aromatic polyamines, acid anhydrides, phenolic novolac resins, and dicyandiamides (DICY).

When a curing agent that causes an epoxy resin to cure in the temperature range from low to room temperature is used, the glass transition temperature of the cured epoxy resin is low and the cured epoxy resin tends to be soft. Consequently, a formed body formed from the paste also tends to be soft. From the viewpoint of improving the heat resistance and mechanical strength of the formed body, the curing agent preferably contains a heat-curable curing agent.

Among heat-curable curing agents, it is preferable to use a curing agent that is liquid at 25 °C from the viewpoint of lowering the viscosity of the paste. As the liquid curing agent, for example, at least one selected from the group consisting of an amine-based curing agent such as an aliphatic or aromatic polyamine and an aliphatic or aromatic amine, a polymercaptan, an acid anhydride, and an imidazole-based curing agent can be used. As long as the viscosity rise of the paste can be suppressed, a curing agent that is solid at 25 °C may be used, or a liquid curing agent and a solid curing agent may be used together. As the solid curing agent, for example, dicyandiamide, a tertiary amine, an imidazole-based curing agent, and an imidazoline-based curing agent may be used. The exemplified solid curing agents are multifunctional or work catalytically, and thus even a small amount can work well.

In one embodiment, the curing agent preferably contains at least one selected from the group consisting of an amine-based curing agent, an imidazole-based curing agent, and an imidazoline-based curing agent. The curing agent more preferably contains at least one selected from the group consisting of an amine-based curing agent and an imidazole-based curing agent. In one embodiment, the curing agent preferably contains at least an amine-based curing agent.

An amine-based curing agent (more specifically, a tertiary amine), an imidazole-based curing agent, and an imidazoline-based curing agent can also be used as curing accelerators in combination with another curing agent.

The amine-based curing agent may be a compound having at least two amino groups in a molecule. The amine-based curing agent contains at least one selected from the group consisting of an aliphatic amine and an aromatic amine.

The aliphatic amine may be a compound having a linear or cyclic structure. Examples include diethylenetriamine, triethylenetetramine, n-propylamine, 2-hydroxyethylaminobropylamine, cyclohexylamine, methylcyclohexylamine, isophorondiamine, 4,4'-diamino-dicyclohexylmethane, and diazabicycloundecene.

The aromatic amine may be a compound in which an aromatic compound have amino group, and is particularly preferably a compound having a structure in which hydrogen of a benzene ring is substituted with an amino group. Examples include benzyldimethylamine, trisdimethylaminomethylphenol, metaphenylenediamine, benzyldimethylamine, 4,4'-diaminodiphenylmethane, 2-methylaniline, diaminodiphenylsulfone, polyamidoamine, an amine compound represented by formula (1) below, and an amine compound represented by formula (2) below.

Although not particularly limited, when an amine-based curing agent is used, the adjustment of the viscosity and thermogravimetric reduction amount tends to be easy. From thereamong, when an aromatic amine is used, the adjustment of the viscosity and thermogravimetric reduction rate tends to be easier.

The imidazole-based curing agent is a compound having an imidazole skeleton and may be an imidazole-based compound in which a hydrogen atom in a molecule is substituted with a substituent. In one embodiment, the imidazole-based curing agent may be a compound having an imidazole skeleton such as an alkyl group-substituted imidazole. Examples of the imidazole-based curing agent include imidazole, 2-methylimidazole, 2-ethylimidazole, and 2-isopropylimidazole. In one embodiment, "CUREZOL 2E4MZ" (2-ethyl-4-methylimidazole) manufactured by SHIKOKU CHEMICALS CORPORATION can be suitably used.

The imidazoline-based curing agent may be a compound having an imidazoline skeleton and may be an imidazoline-based compound in which a hydrogen atom in a molecule is substituted with a substituent. It may be a compound having an imidazoline skeleton such as an alkyl group-substituted imidazoline. Examples of the imidazoline-based curing agent include imidazoline, 2-methylimidazoline, and 2-ethylimidazoline.

From the viewpoint of compatibility with a liquid epoxy resin and storage stability, the curing agent preferably contains at least an aromatic amine. An aromatic ring of the aromatic amine may have a substituent other than an amino group. For example, it may have an alkyl group having 1 to 5 carbon atoms, or may have an alkyl group having 1 or 3 carbon atoms. The number of aromatic rings in an aromatic amine may be one or two or more. When the number of aromatic rings is two or more, the aromatic rings may be bonded to each other through a single bond or through a linking group such as an alkylene group.

In one embodiment, a curing agent preferably contains a liquid aromatic amine from the viewpoint of the viscosity of the paste. For example, at least one selected from the group consisting of a compound represented by formula (1) below and a compound represented by formula (2) below can be used. In a compound represented by formula (2), a compound in which a methyl group is substituted with an ethyl group can also be used. In one embodiment, a compound represented by formula (1) below can be suitably used.

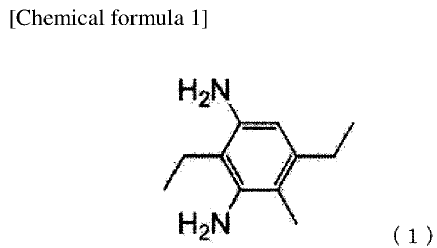

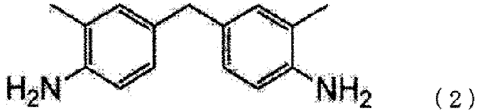

Aromatic amines in liquid form that can be used as curing agents can also be obtained as commercial products. Examples include "Grade: jERCURE WA" (product name) (a compound represented by formula (1), 2,6-diamino-3,5-diethyltoluene) manufactured by Mitsubishi Chemical Corporation, and "KAYAHARD AA" (product name) (3,3'-diethyl-4,4'-diaminodiphenylmethane) manufactured by Nippon Kayaku Co., Ltd.

Although not particularly limited, when at least one of an aromatic amine and an imidazole-based compound described above is used as a curing agent, a cured product having a lower CTE tends to be easily obtained as compared to a cured product obtained using other curing agents. From this viewpoint, in one embodiment, a curing agent preferably contains at least one selected from the group consisting of 2,6-diamino-3,5-diethyltoluene, 3,3'-dimethyl (or diethyl)-4,4'-diaminodiphenylmethane, and 2-ethyl-4-methylimidazole.

The amount of the curing agent in the paste is not particularly limited. It can be set in consideration of the ratio between the equivalent number of epoxy groups in an epoxy group-containing compound such as an epoxy resin and the equivalent number of active groups in the curing agent. For example, the ratio of the curing agent to 1 equivalent of epoxy groups in an epoxy group-containing compound can be preferably 0.5 to 1.5 equivalents, more preferably 0.9 to 1.4 equivalents, and even more preferably 1.0 to 1.2 equivalents.

When the above ratio of active groups in the curing agent is 0.5 equivalents or more, the amount of OH per unit weight of an epoxy resin after heat curing becomes smaller, and a decrease in the curing rate of the epoxy resin can be prevented. In addition, a decrease in the glass transition temperature of the obtained cured product and a decrease in the elastic modulus of the cured product can be prevented. Furthermore, a decrease in the insulation reliability of the cured product due to the unreacted resin component in the binder resin can be prevented.

In contrast, when the ratio of active groups in the curing agent is 1.5 equivalents or less, a decrease in the mechanical strength of the formed body formed from the paste after heat curing can be prevented. In addition, a decrease in the insulation properties of the cured product due to the unreacted curing agent can be prevented. However, in the above embodiment, the ratio of active groups in the curing agent is not limited, and even if the ratio is outside the above ranges, the effect of the present invention can be obtained.

The paste may further contain a curing accelerator as necessary. In one embodiment, the paste may contain a metallic element-containing powder, an epoxy group-containing compound, a curing agent, and a curing accelerator. In another embodiment, the paste may further contain an additive such as a coupling agent and a flame retardant, in addition to the above components. Details will be described below.

### (Curing accelerator)

The curing accelerator is not limited as long as it is a compound that can accelerate the curing reaction between the epoxy resin and the curing agent. Examples of the curing accelerator include a tertiary amine, an imidazole-based curing accelerator, an imidazoline-based curing accelerator, and a phosphorous compound. As the imidazole-based curing accelerator and the imidazoline-based curing accelerator, compounds exemplified earlier as imidazole-based curing agents and imidazoline-based curing agents may be used. Among liquid curing agents, when a liquid acid anhydride is used, it is preferable to use a curing accelerator in combination. The paste may contain one or more curing accelerators. When a curing accelerator is used, the mechanical strength of the formed body formed from the paste can be enhanced and also the curing temperature of the paste can be easily reduced.

The blending amount of a curing accelerator may be any amount as long as the curing acceleration effect is obtained, and is not particularly limited. However, from the viewpoint of improving the curability and fluidity of the paste during moisture absorption, the blending amount of the curing accelerator may be preferably 0.001 parts by mass or more with respect to a total of 100 parts by mass of the epoxy resin and the curing agent. The blending amount of the curing accelerator may be more preferably 0.01 parts by mass or more, and even more preferably 0.1 parts by mass or more. In contrast, the blending amount of the curing accelerator can be preferably 5 parts by mass or less, more preferably 4 parts by mass or less, and more preferably 3 parts by mass or less.

When the blending amount of the curing accelerator is set to 0.001 parts by mass or more, a sufficient curing acceleration effect can be easily obtained. When the blending amount of the curing accelerator is 5 parts by mass or less, excellent storage stability can be easily obtained in the paste. However, even if the blending amount and the amount of the curing accelerator are outside the above ranges, the effect of the present invention is obtained.

### (Coupling agent)

When a coupling agent is used, it becomes easy to improve dispersibility of the metallic element-containing powder in the paste and to control the paste viscosity. In addition, it becomes easy to improve adhesion between the binder resin and the metallic element-containing powder. Furthermore, it becomes easy to improve adhesion, flexibility, and mechanical strength of the cured product formed from the paste with respect to a substrate. The coupling agent may be, for example, at least one selected from the group consisting of a silane-based compound (silane coupling agent), a titanium-based compound, an aluminum compound (aluminum chelates), and an aluminum/zirconium-based compound. The silane coupling agent may be, for example, at least one selected from the group consisting of epoxysilane, mercaptosilane, aminosilane, alkylsilane, ureidosilane, acid-anhydride-based silane, and vinylsilane. In particular, an aminophenyl-based silane coupling agent is preferred. The paste may contain at least one of the above coupling agents. The paste may contain two or more of the above coupling agents.

### (Flame retardant)

For the environmental safety, recyclability, formability, and low cost of the paste, the paste may contain a flame retardant. The flame retardant may be, for example, at least one selected from the group consisting of a brominated flame retardant, a phosphorous flame retardant, a hydrated metal compound-based flame retardant, a silicone-based flame retardant, a nitrogen-containing compound, a hindered amine compound, an organometallic compound, and an aromatic engineering plastic. The paste may contain one or two or more of the flame retardants exemplified above.

The paste according to the above embodiment may contain an organic solvent as necessary. The organic solvent is not particularly limited. For example, an organic solvent capable of dissolving a binder resin can be used. The organic solvent may be, for example, at least one selected from the group consisting of acetone, methyl ethyl ketone, methyl isobutyl ketone, benzene, toluene, carbitol acetate, butyl carbitol acetate, cyclohexanone, and xylene. From the viewpoint of workability, the organic solvent is preferably liquid at the normal temperature (25 °C). From the viewpoint of workability, the boiling point of the organic solvent is preferably 50 °C or more and 160 °C or less.

In contrast, when the paste contains an organic solvent, a drying process is required after the application of the paste, resulting in an environmental load caused by a volatile component. In the case of an organic solvent having a lower boiling point than the heating temperature during curing, voids may be generated in the cured product of the paste due to volatilization during heating. In the case of an organic solvent having a higher boiling point than the heating temperature during curing, the organic solvent is difficult to volatilize during heating and may remain in the paste as it is and cause the properties of the cured product of the paste to degrade. For example, when voids are present in the cured product, properties such as mechanical strength and magnetic properties tend to degrade. In particular, when an organic solvent remains in the cured product, ion components and the like in the cured product tend to migrate easily and insulation properties such as the insulation resistance value and insulation reliability tend to degrade.

From these viewpoints, when the paste according to the above embodiment contains an organic solvent, the amount is, based on the total mass of the paste, preferably 5% by mass or less, more preferably 3% by mass or less, and even more preferably 1% by mass or less. It is most preferable that the paste be substantially free of organic solvents. In this specification, "substantially free" means that no organic solvent is intentionally added to the paste. Thus, the paste may contain, for example, an organic solvent that is used in the manufacture of the resin and has remained in the resin.

Without using a volatile component such as an organic solvent, the paste according to the above embodiment can be adjusted to an appropriate viscosity and has fluidity. In one embodiment, from the viewpoint of applicability, the viscosity of the paste is preferably 1 Pa·s or more, more preferably 10 Pa·s or more, and even more preferably 100 Pa·s or more. By adjusting the viscosity to 1 Pa·s or more, liquid dripping after application can be suppressed and the pattern shape can be easily prevented from collapsing after printing. In addition, sedimentation of the metallic element-containing powder in the paste can be suppressed, and deterioration in applicability due to the passage of time after stirring the paste can be easily improved.

In contrast, the viscosity of the paste may be preferably 600 Pa·s or less, more preferably 400 Pa·s or less, and even more preferably 200 Pa·s or less. By adjusting the viscosity to 600 Pa·s or less, the paste becomes fluid and good applicability can be easily obtained.

In one embodiment, when the paste is applied to screen printing, the viscosity of the paste is preferably 10 to 400 Pa·s, more preferably 50 to 300 Pa·s, and even more preferably 100 to 250 Pa·s.

When the viscosity is adjusted to the above ranges, in screen printing, the occurrence of a defect in which the paste does not penetrate an opening of a plate can be suppressed. The viscosity of the paste can be freely adjusted by means of the structure and properties of an epoxy group-containing compound, the structure and properties of a curing agent, their combination and blending ratio, and the structure and blending ratio of an additive such as a curing accelerator and a coupling agent. The paste may contain an additive such as a viscosity modifier, a thixotropic agent, and a dispersion stabilizer.

The paste according to the above embodiment can be easily adjusted to a viscosity in the above preferred ranges without substantially using an organic solvent even when the amount of the metallic element-containing powder is increased. For example, when the paste has a thermogravimetric reduction rate of 5% or less of the cured product when it is heat-treated at 180 °C, the performance degradation of the cured product due to a volatile component such as an organic solvent can be suppressed and a formed body having excellent properties such as insulation properties can be easily provided.

### (Method for preparing paste)

The paste according to the above embodiment can be prepared, for example, by uniformly stirring and kneading a metallic element-containing powder with a binder resin containing at least an epoxy group-containing compound and a curing agent. The stirring and kneading method is not particularly limited, and for example, a stirring blade, self-rotating stirring, roll mill, disc mill, and ball mill can be used.

### (Formed body)

When a formed body is formed from the paste according to the above embodiment, curing of the paste may be advanced through heat treatment to produce a B-stage formed body. The resin in the formed body may be sufficiently cured through further heat treatment of the B-stage formed body. Alternatively, a C-stage formed body may be made from the paste in a single operation.

Depending on a composition or a combination of a metallic element-containing powder contained in the paste, various properties such as the electromagnetic properties or thermal conductivity of the formed body can be controlled as desired, and the formed body can be used in various industrial products or raw materials thereof.

Industrial products manufactured using the paste may be, for example, automobiles, medical equipment, electronic equipment, electrical equipment, information and communication equipment, home appliances, acoustic equipment, and general industrial equipment. For example, a formed body (e.g. a sheet) formed from the paste containing a magnetic powder such as an Fe-Si-Cr based alloy or ferrite can be used as a raw material (e.g. a magnetic core) for an inductor such as an EMI filter. A paste containing a permanent magnet powder can be used as a raw material for a bonded magnet. A formed body (e.g. a sheet) formed from the paste containing an iron powder and a copper powder can be used as an electromagnetic wave shield. In one embodiment, a formed body (a cured product) formed using the paste can be suitably used in inductor applications because of its low CTE of less than 40 ppm/C°. For example, when a cured product is applied using the paste to a peripheral material having a low CTE such as a wiring board material, the occurrence of defects such as warpage, delamination at the interface with the peripheral material, and cracking caused by the difference in CTE can be easily suppressed and reliability can be enhanced.

### EXAMPLES

The present invention will be described in more detail below with examples and comparative examples, but the present invention is not in any way limited by these examples.

### <Example 1-1>

### (1) Preparation of binder resin

An amount of 40.00 g of "ADEKA GLYCIROL ED-503G", a liquid epoxy resin manufactured by ADEKA Corporation, and an amount of 13.33 g of "jERCURE WA" (liquid aromatic amine), a curing agent manufactured by Mitsubishi Chemical Corporation, were weighed and these raw materials were placed in a 250-ml ointment container.

The binder was obtained by stirring and kneading all the raw materials in the ointment container using a planetary centrifugal mixer. As the planetary centrifugal mixer, an "ARE-500" manufactured by THINKY CORPORATION was used. Stirring and kneading were performed for 1 minute with a revolution speed of the planetary centrifugal mixer set to 2,000 rpm. Binder resin I was obtained by stirring the above binder resin using a medicine spoon and then stirring and kneading again for 1 minute with the revolution speed of the planetary centrifugal mixer set to 2,000 rpm.

### (2) Preparation of paste

An amount of 2.26 g of the above binder resin I, an amount of 60.00 g of "KUAMET9A4" (Fe-Si-B based alloy with insulating coating, D50:20 µm) which is an iron amorphous alloy powder manufactured by EPSON ATMIX Corporation and an amount of 13.17 g of "SAP-2C" (Fe-Si-B-P-Nb-Cr based alloy with insulating coating, D50:2.2 µm) which is a metallic glass magnetic powder manufactured by SINTOKOGIO, LTD. as a metallic element-containing powder (hereinafter referred to as a metal powder), and an amount of 0.22 g of "KBM-573" which is a silane coupling agent manufactured by Shin-Etsu Chemical Co., Ltd. were weighed, and these raw materials were placed in a 50-ml ointment container.

The raw materials in the ointment container were stirred using the planetary centrifugal mixer at a revolution speed of 2,000 rpm for 45 seconds. Paste 1-1 was prepared by stirring the raw materials in the ointment container using a medicine spoon and then stirring using the planetary centrifugal mixer at a revolution speed of 2,000 rpm twice for 45 seconds.

The amount of the metal powder in the obtained paste 1-1 was 97% by mass. The amount of the metal powder is calculated from m/(m+M) where 'M' is the mass of a nonvolatile component (solid content) other than the metal powder contained in the paste and 'm' is the mass of the metal powder.

### <Example 1-2>

Paste 1-2 was prepared in the same manner as in Example 1-1 except that the blending amount of binder resin I was changed to 3.45 g. The amount of the metal powder in the obtained paste 1-2 was 95 % by mass.

### <Examples 1-3 to 1-6>

Pastes 1-3 to 1-6 having the metal powder amounts illustrated in Table 1 were prepared in the same manner as example 1-1 except that the blending amount of binder resin I was changed.

### <Example 2-1>

### (1) Preparation of binder resin

An amount of 40.00 g of "YDF-8170C", a liquid epoxy resin manufactured by Nippon Steel Chemical CO., Ltd., and an amount of 11.13 g of "jERCURE WA" (liquid aromatic amine), a curing agent manufactured by Mitsubishi Chemical Corporation, were weighed. These were used as raw materials and placed in a 250-ml ointment container.

The binder resin was obtained by stirring and kneading all the raw materials in the ointment container using a planetary centrifugal mixer. As the planetary centrifugal mixer, an "ARE-500" manufactured by THINKY CORPORATION was used. Stirring and kneading were performed for 1 minute with the revolution speed of the planetary centrifugal mixer set to 2,000 rpm. Binder resin II was obtained by stirring the above binder resin using a medicine spoon and then stirring and kneading again for 1 minute with the revolution speed of the planetary centrifugal mixer set to 2,000 rpm.

### (2) Preparation of paste

An amount of 5.51 g of the above binder resin II, an amount of 60.00 g of "KUAMET9A4" (Fe-Si-B based alloy with insulating coating, D50:20 µm) which is an iron amorphous alloy powder manufactured by EPSON ATMIX Corporation and an amount of 13.17 g of "SAP-2C" (Fe-Si-B-P-Nb-Cr based alloy with insulating coating, D50:2.2 µm) which is a metallic glass magnetic powder manufactured by SINTOKOGIO, LTD. as a metal powder, and an amount of 0.22 g of "KBM-573" which is a silane coupling agent manufactured by Shin-Etsu Chemical Co., Ltd., were weighed. These were used as raw materials and placed in a 50-ml ointment container.

All the raw materials in the ointment container were stirred and kneaded using the planetary centrifugal mixer at a revolution speed of 2,000 rpm for 45 seconds. Then, paste 2-1 was prepared by stirring the raw materials in the ointment container using a medicine spoon and then stirring twice using the planetary centrifugal mixer at a revolution speed of 2,000 rpm for 45 seconds.

The amount of the metal powder in the obtained paste 2-1 was 93% by mass. The amount of the metal powder was calculated from m/(m+M) where 'M' is the mass of a nonvolatile component (solid content) other than the metal powder in the paste and 'm' is the mass of the metal powder.

### <Examples 2-2 to 2-4>

Pastes 2-2 to 2-4 having the amount of the metal powder illustrated in Table 1 were prepared in the same manner as in example 2-1 except that the blending amount of binder resin II was changed.

### <Example 3>

An amount of 3 g of binder resin I prepared in the same manner as in example 1-1 and an amount of 7 g of binder resin II prepared in the same manner as in example 2-1 were weighed. These were placed in an ointment container and stirred and kneaded using a planetary centrifugal mixer in the same manner as in example 1-1 to obtain binder resin I-II.

Then, in the same manner as in example 2-1 except that binder resin I-II was used, paste 3 having a metal powder amount of 94% by mass was obtained.

### <Example 4>

An amount of 0.86 g of "NC-3000-H" which is a solid epoxy resin manufactured by Nippon Kayaku Co., Ltd., and an amount of 0.14 g of "jERCURE WA" (liquid aromatic amine) which is a curing agent manufactured by Mitsubishi Chemical Corporation were weighed. These were placed in an ointment container and stirred and kneaded using a planetary centrifugal mixer in the same manner as in example 1-1 to obtain binder resin III.

Then, an amount of 7 g of binder resin I prepared in the same manner as in example 1 and an amount of 9 g of binder resin III prepared earlier were weighed. These were placed in the ointment container and stirred and kneaded using the planetary centrifugal mixer in the same manner as in example 1-1 to obtain binder resin I-III.

Furthermore, paste 4 having a metal powder amount of 94% by mass was obtained in the same manner as in example 2-1 except that binder resin I-III was used.

### <Example 5>

An amount of 28.00 g of "YDF-8170C" which is a liquid epoxy resin manufactured by Nippon Steel Chemical Co., Ltd., and an amount of 12.00 g of "ADEKA GLYCIROL ED-503G" which is a liquid epoxy resin manufactured by ADEKA Corporation were weighed in a 100-ml ointment container. A planetary centrifugal mixer was used to stir the mixture for 2 minutes at a revolution speed of 2,000 rpm. After stirring the raw materials in the ointment container with a medicine spoon, the mixture was stirred again with the planetary centrifugal mixer at a revolution speed of 2,000 rpm for 2 minutes. Binder resin IV was prepared by adding 2.00 g of " CUREZOL 2E4MZ" which is a liquid imidal-based curing agent manufactured by SHIKOKU CHEMICALS CORPORATION and stirring using the planetary centrifugal mixer at a revolution speed of 2,000 rpm for 2 minutes.

Next, paste 5 having a metal powder amount of 94% by mass was obtained in the same manner as in example 2-1 except that binder resin IV obtained earlier was used.

### <Example 6>

In the preparation of binder resin IV in example 5, the curing agent was changed to an amount of 13.08 g of 4,4'-diaminodiphenylmethane manufactured by Tokyo Chemical Industry Co., Ltd. to prepare binder resin V.

Next, paste 6 having a metal powder amount of 94% by mass was obtained in the same manner as in example 2-1 except that binder resin V obtained earlier was used.

### <Example 7>

In the preparation of binder resin IV in example 5, the curing agent was changed to an amount of 6.44 g of triethylenetetramine manufactured by Tokyo Chemical Industry Co., Ltd. to prepare binder resin VI.

Next, paste 7 having a metal powder amount of 94% by mass was obtained in the same manner as in example 2-1 except that binder resin VI obtained earlier was used.

### <Example 8>

In the preparation of binder resin IV in example 5, the curing agent was changed to an amount of 10.82 g of isophorone diamine manufactured by Tokyo Chemical Industry Co., Ltd. to prepare binder resin VII.

Next, paste 8 having a metal powder amount of 94% by mass was obtained in the same manner as in example 2-1 except that binder resin VII obtained earlier was used.

### <Example 9>

In the preparation of binder resin IV in example 5, the curing agent was changed to an amount of 2.00 g of tris dimethylaminomethylphenol manufactured by Tokyo Chemical Industry Co., Ltd. to prepare binder resin VIII.

Next, paste 9 having a metal powder amount of 94% by mass was obtained in the same manner as in example 2-1 except that binder resin VIII obtained earlier was used.

### <Example 10>

In the preparation of binder resin IV in example 5, the curing agent was changed to an amount of 8.97 g of metaphenylenediamine manufactured by Tokyo Chemical Industry Co., Ltd. to prepare binder resin IX.

Next, paste 10 having a metal powder amount of 94% by mass was obtained in the same manner as in example 2-1 except that binder resin IX obtained earlier was used.

### <Example 11>

In example 5, an amount of 60.00 g of "KUAMET 9A4" (Fe-Si-B based alloy with insulating coating, D50:20 µm) manufactured by EPSON ATMIX Corporation, and an amount of 13.17 g of "BSN-125" (Ni-Zn based soft ferrite powder without insulation coating, D50:10 µm) manufactured by TODA KOGYO CORP. were used as metal powders. Other than this, paste 11 having a metal powder amount of 94% by mass was obtained in the same manner as in example 5.

### <Comparative example 1>

### (1) Preparation of binder resin X

An amount of 71.37 g of "TEISANRESIN HTR-860-P3" (cyclohexanone solution with acrylic resin amount of 12.6 wt%) manufactured by Nagase ChemteX Corporation, an amount of 15.00 g of "NC-3000-H", a solid epoxy resin manufactured by Nippon Kayaku Co., Ltd., an amount of 6.00 g of "HP850N" (phenol novolac resin), a curing agent manufactured by Showa Denko Materials Co., Ltd. (formerly Hitachi Chemical Company, Ltd.), an amount of 0.15 g of "2E4MZ" which is a curing accelerator manufactured by SHIKOKU CHEMICALS CORPORATION, and an amount of 21.30 g of "Cyclohexanone" manufactured by FUJIFILM Wako Pure Chemical Corporation were weighed. These raw materials were placed in a 250-ml ointment container.

Binder resin varnish X was obtained by stirring and kneading all the raw materials in the ointment container using a planetary centrifugal mixer. As the planetary centrifugal mixer, an "ARE-500" manufactured by THINKY CORPORATION was used. Stirring and kneading were performed twice for 20 minutes with the revolution speed of the planetary centrifugal mixer set to 2,000 rpm. The NV (amount of a nonvolatile component) of the obtained binder resin varnish X was 26.49% by mass. Of binder resin varnish X, the components excluding the organic solvent (such as cyclohexanone) constitute binder resin X.

### (2) Preparation of paste

An amount of 8.54 g of binder resin varnish X, an amount of 60.00 g of "KUAMET9A4" (Fe-Si-B based alloy with insulating coating, D50:20 µm) manufactured by EPSON ATMIX Corporation and an amount of 13.17 g of "SAP-2C" (Fe-Si-B-P-Nb-Cr based alloy with insulating coating, D50:2.2 µm) manufactured by SINTOKOGIO, LTD. as a metal powder, and an amount of 0.22 g of "KBM-573" which is a silane coupling agent manufactured by Shin-Etsu Chemical Co., Ltd. were weighed. These were used as raw materials and placed in a 50-ml ointment container.

All the raw materials in the ointment container were stirred and kneaded using the planetary centrifugal mixer at a revolution speed of 2,000 rpm for 45 seconds. Then, using a medicine spoon, the raw materials in the ointment container were stirred. Furthermore, paste 12 was prepared by stirring the raw materials twice for 45 seconds at a revolution speed of 2,000 rpm using the planetary centrifugal mixer.

The amount of the metal powder based on the total solid content of obtained paste 12 was 97% by mass. The above amount of the metal powder is calculated from m/(m+M) where 'M' is the mass of a nonvolatile component (solid content) other than the metal powder contained in paste 12 and 'm' is the mass of the metal powder.

### <Comparative example 2>

Paste 13 containing 84% by mass of the metal powder was prepared in the same manner as in comparative example 1 except that the amount of binder resin varnish X was changed.

### <2> Evaluation of paste properties

For each paste obtained in the examples and comparative examples, various properties were evaluated according to the methods described below.

### <Evaluation of viscosity >

The viscosity of each paste obtained in the examples and comparative examples was measured using a TV-33 type viscometer manufactured by Toki Sangyo Co., Ltd. under the conditions of a temperature of 25 °C, an SPP rotor, and rotation speed of 2.5 rpm. The measured values were evaluated according to the following criteria. The results are illustrated in Table 1. When screen printing is assumed, good applicability can be easily obtained in categories 2, 3, and 4. Among them, category 3 is most preferable.

### (Viscosity category)

1: Viscosity is less than 1 Pa·s
2: Viscosity is 1 Pa·s or more and 10 Pa·s or less
3: Viscosity is more than 10 Pa·s and 400 Pa·s or less
4: Viscosity is more than 400 Pa·s and 600 Pa·s or less
5: Viscosity is more than 600 Pa·s

### <Thermogravimetric reduction rate>

The thermogravimetric reduction rate of the pastes was measured using a simultaneous thermogravimetric analyzer (TG-DSC) "NEXTA STA200RV" manufactured by Hitachi High-Tech Science Corporation. Specifically, an amount of 15 mg of a paste was warmed in a nitrogen atmosphere from 25 to 100 °C at a rate of 10 °C/min and was held at 100 °C for 1 hour. Then, the paste was warmed from 100 to 180 °C at a rate of 3 °C/min and was heated while being held at 180 °C for 1 hour, and the amount of thermogravimetric reduction was measured.

The thermogravimetric reduction rate was calculated as the proportion of weight loss (reduction rate) of the paste after heating at 180 °C, based on the weight of the paste (before heating) at 25 °C (100%). The thermogravimetric reduction rate can be used to evaluate the amount of a volatile component in the paste. From the thermogravimetric reduction rate of the pastes, when the following criteria of "AA", "A", or "B" are satisfied, it is said that the amount of a volatile component in a paste is low and good. The results are illustrated in Table 1.

### (Evaluation criteria)

AA: Thermogravimetric reduction rate is 0% or more and 1.0% or less
A: Thermogravimetric reduction rate is 1.0% or more and 3.0% or less
B: Thermogravimetric reduction rate is 3.0% or more and 5.0% or less
C: Thermogravimetric reduction rate is greater than 5.0%

### <Insulation resistance >

Eight sheets of polyimide tape (125 µm thick) manufactured by UNIONTAPE were stacked and affixed onto copper foil to form a 7-cm square frame. The paste was poured into the frame and the paste layer was heated in a nitrogen atmosphere at 100 °C for 1 hour. The temperature was then raised to 150 °C and maintained and heating was performed for 20 minutes.

Then, another piece of copper foil was placed over the paste layer, and the paste layer was maintained under vacuum conditions at 165 °C and 2 MPa for 30 minutes using a vacuum press (manufactured by Imoto machinery Co., LTD., manual hydraulic vacuum heating press, 1A31). Next, the temperature was raised to 180 °C and then was maintained for 1 hour to cure the paste layer.

Next, the copper foil on both the upper and lower surfaces was peeled off to obtain a sample plate made from a cured product of the paste. The film thickness of the sample plate (cured product of the paste) was 1 mm. The volume resistivity of the sample plate was calculated from a sheet resistance value measured using a four-point probe sheet resistance measuring instrument and the film thickness obtained from a micrometer. The insulation resistance (insulation properties) was evaluated according to the following criteria. The results are illustrated in Table 1. When "A" or "B" is satisfied in the following criteria, the insulation properties are good.

### (Evaluation criteria)

A: Volume resistivity is 1.0 × 10¹² µΩ·cm or more
B: Volume resistivity is 1.0 × 10¹¹ µΩ·cm or more and less than 1.0 × 10¹² µΩ·cm
C: Volume resistivity is less than 1.0 × 10¹¹ µΩ·cm

### (Evaluation of insulation reliability)

Using a metal squeegee manufactured by TAKU GIKEN and using the thickness of polyimide tape as a spacer, each paste obtained in the examples and comparative examples was applied on a comb-shaped wiring board having a line and space pattern of 200 µm/200 µm. The paste layer was then heated in a nitrogen atmosphere at 100 °C for 1 hour. The paste was then cured by raising the temperature from room temperature to 180 °C for 50 minutes under vacuum conditions in a vacuum dryer (square vacuum constant temperature dryer, DP32, manufactured by Yamato Scientific Co., Ltd.) and maintaining the temperature for 60 minutes to form a cured layer (insulating magnetic layer) having a thickness of 100 µm on the wiring board.

Using as a sample the wiring board having the cured layer obtained as described above, the initial insulation resistance value and the insulation resistance value after a migration test of the insulation resistance were measured. In the migration test, the sample was left for 500 hours under conditions of a temperature of 85 °C, a humidity of 85%, and the application of 12 V.

For five samples having an initial insulation resistance value of 10⁶ Ω or more, the proportion of samples having an insulation resistance value of 10⁶ Ω or more after the migration test was examined to evaluate the insulation reliability in wires. Specifically, the insulation reliability was evaluated according to the following criteria. The results are illustrated in Table 1. When "A" or "B" is satisfied in the following criteria, the insulation reliability is good.

### (Evaluation criteria)

A: Among all five samples, five samples have an insulation resistance value of 10⁶ Ω or more
B: Among all five samples, four samples have an insulation resistance value of 10⁶ Ω or more
C: Among all five samples, three samples or less have an insulation resistance value of 10⁶ Ω or more

### <Coefficient of thermal expansion (CTE)>

Eight sheets of polyimide tape (125 µm thick) manufactured by UNIONTAPE were stacked and affixed onto copper foil to form a 7-cm square frame. The pastes of the examples were poured into the frame and was preformed to obtain a paste layer. Preforming was carried out in a nitrogen atmosphere by heating the paste at 100 °C for 1 hour, followed by raising the temperature to 150 °C, then the temperature was maintained and heating was performed for 20 minutes. The paste layer was then covered with copper foil from the top and was maintained under vacuum conditions at 165 °C and 2 MPa for 30 minutes using a vacuum press (manufactured by Imoto machinery Co., Ltd., manual hydraulic vacuum heating press, 1A31). Next, the temperature was raised to 180 °C and then was maintained for 1 hour to cure the paste layer (1 mm thick).

In contrast, since the paste of the comparative examples contained an organic solvent, the following was performed. First, the paste was bar-coated using an applicator on the release surface of a PET film and heated at 120 °C for 20 minutes to form a dry paste layer having a thickness of about 50 µm. The paste layer was peeled off from the PET film and preformed into a 7-cm square having a thickness of about 1.2 mm by stacking or affixing layers together through vacuum laminating. Next, 8 sheets of polyimide tape (125 µm thick) manufactured by UNIONTAPE were stacked and affixed onto copper foil to form a 7-cm square frame. The preformed paste layer was placed in the frame first, then was covered with the copper foil from the top, and was maintained under vacuum conditions at 165 °C and 2 MPa for 30 minutes using a vacuum press (manufactured by Imoto machinery Co., Ltd., manual hydraulic vacuum heating press, 1A31). Next, the temperature was raised to 180 °C and then was maintained for 1 hour to cure the paste layer (1 mm thick).

Then, the copper foil on both the upper and lower surfaces of the paste layer cured as described above was peeled off to obtain a sample plate made from a cured product of the paste for each of the examples and comparative examples. From this sample plate, a 10-mm square sample piece was cut. The CTE (coefficient of thermal expansion) of the sample piece was measured using a TMA (thermomechanical analyzer, TMA-Q400, manufactured by TA Instruments.). The measurement was performed in a range of 0 to 250 °C at a temperature increase rate of 10 °C/min, and the coefficient of linear expansion α1 (ppm/°C) in the region below the glass transition temperature was calculated. The CTE was evaluated according to the following criteria based on the obtained α1 value. The results are illustrated in Table 1. The CTE is good when "AA", "A", or "B" is met in the following criteria.

### (Evaluation criteria)

AA: α1 is 25 ppm/°C or less
A: α1 is more than 25 ppm/°C and 30 ppm/°C or less
B: α1 is more than 30 ppm/°C and 40 ppm/°C or less
C: α1 is more than 40 ppm/°C

**[Table 1]**

| | Paste composition | | Evaluation of paste properties | | | | |
|---|---|---|---|---|---|---|---|
| Items | Paste (Binder resin) | Metal powder amount (% by mass) | Viscosity category | Thermogravimetric reduction rate | Insulation resistance | Insulation reliability | CTE |
| Example 1-1 | Paste 1-1 (resin I) | 97 | 5 | AA | B | B | AA |
| Example 1-2 | Paste 1-2 (resin I) | 95 | 4 | AA | A | A | AA |
| Example 1-3 | Paste 1-3 (resin I) | 94 | 3 | AA | A | A | AA |
| Example 1-4 | Paste 1-4 (resin I) | 90 | 3 | AA | A | A | A |
| Example 1-5 | Paste 1-5 (resin I) | 85 | 3 | A | A | A | B |
| Example 1-6 | Paste 1-6 (resin I) | 80 | 2 | A | A | A | B |
| Example 2-1 | Paste 2-1 (resin II) | 93 | 4 | AA | A | A | AA |
| Example 2-2 | Paste 2-2 (resin II) | 90 | 3 | AA | A | A | A |
| Example 2-3 | Paste 2-3 (resin II) | 80 | 3 | AA | A | A | B |
| Example 2-4 | Paste 2-4 (resin II) | 70 | 2 | A | A | A | B |
| Example 3 | Paste 3 (resin I-II) | 94 | 3 | AA | A | A | AA |
| Example 4 | Paste 4 (resin I-III) | 94 | 3 | AA | A | A | AA |
| Example 5 | Paste 5 (resin IV) | 94 | 4 | AA | A | A | AA |
| Example 6 | Paste 6 (resin V) | 94 | 4 | AA | A | A | A |
| Example 7 | Paste 7 (resin VI) | 94 | 3 | B | A | A | A |
| Example 8 | Paste 8 (resin VII) | 94 | 3 | B | A | A | A |
| Example 9 | Paste 9 (resin VIII) | 94 | 4 | AA | A | A | A |
| Example 10 | Paste 10 (resin IX) | 94 | 4 | AA | A | A | A |
| Example 11 | Paste 11 (resin IV) | 94 | 4 | AA | A | A | AA |
| Comparative example 1 | Paste 12 (resin X) | 97 | 3 | C | C | C | A |
| Comparative example 2 | Paste 13 (resin X) | 84 | 3 | C | C | C | C |

As illustrated in Table 1, all of the pastes of the examples have a thermogravimetric reduction rate of 5% or less, and excellent insulation resistance and excellent insulation reliability can be obtained in cured products. In addition, all of the pastes of the examples have a thermogravimetric reduction rate of 5% or less, and although the amount of a volatile component such as an organic solvent is small (substantially no organic solvent is contained), it can be seen that the pastes maintain a moderate fluidity and have excellent applicability. Furthermore, all of the pastes of the examples are also good from the viewpoint of the CTE.

In contrast, all of the pastes of the comparative examples had a thermogravimetric reduction rate of more than 5%, resulting in inferior insulation resistance and inferior insulation reliability. This is thought to be because the pastes of the comparative examples contained a large amount of an organic solvent, the organic solvent remained in the cured product even after heat curing of the paste, and short-circuiting was likely to occur in the insulation reliability test. Note that the reason why the low CTE was obtained in the cured product of the pastes of the examples is not clear, but it is supposed that at least the thermogravimetric reduction rate of the paste and the use of a curing agent are related. As can be seen in the examples and comparative examples, among the curing agents, the use of an aromatic amine or imidazole tends to give better results for the CTE than the cured product obtained using other curing agents. Generally, the coefficient of thermal expansion is large when a liquid is vaporized or a gas is heated, but it is considered that the low CTE was obtained because the paste according to the present invention is less likely to have a residual organic solvent in the cured product and is less likely to have voids due to a volatile component.

From the above results, it can be seen that by forming a paste containing a metallic element-containing powder, an epoxy group-containing compound, and a curing agent and having a thermogravimetric reduction rate of 5% or less after heat curing, a paste can be realized that is capable of forming a cured product having excellent properties such as insulation properties.

### INDUSTRIAL APPLICABILITY

The paste according to an embodiment of the present invention can be suitably used, for example, as a material for a magnetic core of an inductor or as a material for filling between conductors of a coil, and is capable of easily providing a formed body having excellent insulation properties.

## Claims

1. A paste comprising: a metallic element-containing powder; an epoxy group-containing compound; and a curing agent, wherein
a thermogravimetric reduction rate is 5% or less after heat curing at 180 °C.

2. The paste according to claim 1, wherein the curing agent contains at least one selected from the group consisting of an amine-based curing agent and an imidazole-based curing agent.

3. The paste according to claim 1 or 2, wherein the epoxy group-containing compound contains an epoxy resin that is liquid at 25 °C.

4. The paste according to any one of claims 1 to 3, wherein the curing agent contains a curing agent that is liquid at 25 °C.

5. The paste according to any one of claims 1 to 4, wherein an amount of the metallic element-containing powder is 70% by mass or more based on a total mass of the paste.

6. The paste according to any one of claims 1 to 5, wherein the metallic element-containing powder contains a magnetic powder.

7. The paste according to any one of claims 1 to 6, wherein a viscosity at 25 °C is 1 Pa·s or more and 600 Pa·s or less.

8. The paste according to any one of claims 1 to 7, wherein the amine-based curing agent contains an aromatic amine.

9. The paste according to any one of claims 1 to 8, wherein a cured product has a coefficient of thermal expansion of 40 ppm/°C or less.

10. The paste according to any one of claims 1 to 9, wherein the paste is used for screen printing.
